(19) Europäisches Patentamt
European Patent Office
Office européen des brevets

(11) Veröffentlichungsnummer: **0 170 612**
**B1**

(12) # EUROPÄISCHE PATENTSCHRIFT

(45) Veröffentlichungstag der Patentschrift: **24.05.89**

(51) Int. Cl.⁴: **C 09 B 62/09,** D 06 P 3/66, D 06 P 1/382

(21) Anmeldenummer: **85810248.6**

(22) Anmeldetag: **29.05.85**

(54) **Reaktivfarbstoffe, deren Herstellung und Verwendung.**

(30) Priorität: **03.07.84 CH 3201/84**

(43) Veröffentlichungstag der Anmeldung: **05.02.86 Patentblatt 86/6**

(45) Bekanntmachung des Hinweises auf die Patenterteilung: **24.05.89 Patentblatt 89/21**

(84) Benannte Vertragsstaaten: **AT BE CH DE FR IT LI LU NL SE**

(56) Entgegenhaltungen:
**EP-A- 0 043 796**
**DE-A- 2 738 823**
**FR-A- 1 543 282**
**FR-A- 2 368 521**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Seitz, Karl, Dr., Schützenweg 9, CH-4104 Oberwil (CH)**

**EP 0 170 612 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung liegt auf dem technischen Gebiet der Reaktivfarbstoffe und deren Anwendung zum Färben oder Bedrucken von textilen Fasermaterialien.

Gegenstand der Erfindung sind Reaktivfarbstoffe der Formel

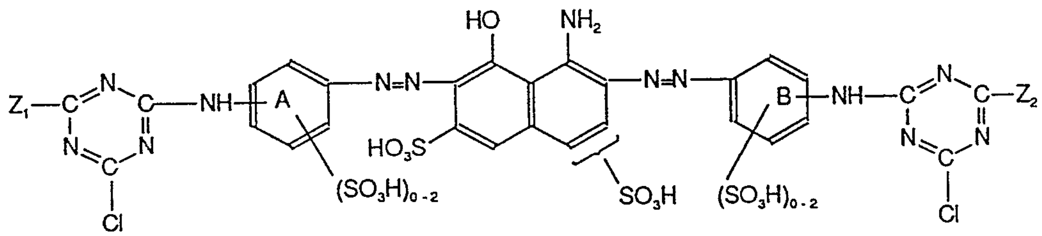

(1),

worin $Z_1$ und $Z_2$ unabhängig voneinander je ein Rest der Formel

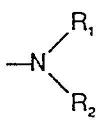

(2),

$R_1$ Alkyl, das durch Hydroxy, Alkoxy, Hydroxyalkoxy, Alkylcarbonyl, Alkoxycarbonyl, Alkylcarbonyloxy, Carboxy, Cyan, Chlor oder Sulfato substituiert sein kann, und $R_2$ Wasserstoff, Alkyl, das durch Hydroxy, Alkoxy, Hydroxyalkoxy, Alkylcarbonyl, Alkoxycarbonyl, Alkylcarbonyloxy, Carboxy, Cyan, Chlor oder Sulfato substituiert sein kann, oder Phenyl, Benzyl oder Phenäthyl, worin der Benzolring durch Methyl, Methoxy, Acetylamino, Chlor, Brom oder Carboxy substituiert sein kann, ist, und die Benzolringe A und B weitersubstituiert sein können.

Der Substituent $R_1$ ist geradkettig oder verzweigt und enthält vorzugsweise 1 bis 6 Kohlenstoffatome. Als Beispiele für $R_1$ seien die folgenden Substituenten genannt: Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Chlorpropyl, γ-Brompropyl, β-Hydroxyäthyl, γ-Hydroxypropyl, β-Hydroxybutyl, β-Cyanäthyl und β-Sulfatoäthyl. Der Substituent $R_2$ ist, falls es sich um einen Alkylrest handelt, geradkettig oder verzweigt und enthält ebenfalls vorzugsweise 1 bis 6 Kohlenstoffatome; $R_2$ kann, wie oben unter Formel (2) angegeben, weitersubstituiert sein. Als Beispiele für $R_2$ seien genannt: Methyl, Aethyl, Propyl, Isopropyl, Butyl, Isobutyl, sek.-Butyl, tert.-Butyl, n-Pentyl und n-Hexyl, sowie die oben für $R_2$ genannten Substituenten.

Als nichtaliphatischer Substituent ist $R_2$ vorzugsweise der Phenylrest.

Als Beispiele für weitere Substituenten an den Benzolringen A und B seien genannt: Alkylgruppen mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acylaminogruppen mit 2 bis 4 Kohlenstoffatomen, wie Acetylamino, Propionylamino oder Butyrylamino, Amino, Alkylamino mit 1 bis 4 Kohlenstoffatomen, wie Methylamino, Aethylamino, Propylamino, Isopropylamino oder Butylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, Ureido, Hydroxy, Carboxy oder Sulfomethyl. Vorzugsweise enthalten A und B als weiter Substituenten Methyl, Aethyl, Methoxy, Aethoxy, Acetylamino, Chlor, Brom, Ureido, Hydroxy, Carboxy oder Sulfomethyl.

Die Reaktivfarbstoffe der Formel (1) enthalten zwei abspaltbare Chloratome, die nach Art einer nucleophilen Substitution reagieren können, sie sind daher faserreaktiv.

Unter faserreaktiven Verbindungen sind solche zu verstehen, die mit den Hydroxygruppen der Cellulose, den Amino-, Carboxy-, Hydroxy- und Thiogruppen bei Wolle und Seide, oder mit den Amino- und eventuell Carboxygruppen von synthetischen Polyamiden unter Bildung kovalenter chemischer Bindungen zu reagieren vermögen.

Bevorzugte Ausbildungsformen der Reaktivfarbstoffe der Formel (1) sind:

a) Reaktivfarbstoffe der Formel (1), worin die Mittelkomponente 1-Amino-8-hydroxynaphthalin-3,6-disulfonsäure ist, und $Z_1$, $Z_2$, A und B die unter Formel (1) angegebenen Bedeutungen haben.

b) Reaktivfarbstoffe der Formel (1), worin $Z_1$ die gleiche Bedeutung wie $Z_2$ hat, und die Benzolringe A und B ausser 0 bis 2 Sulfogruppen keine weiteren Substituenten enthalten.

c) Reaktivfarbstoffe der Formel (1), worin die Benzolringe A und B je eine Sulfogruppe enthalten.

d) Reaktivfarbstoffe der Formel

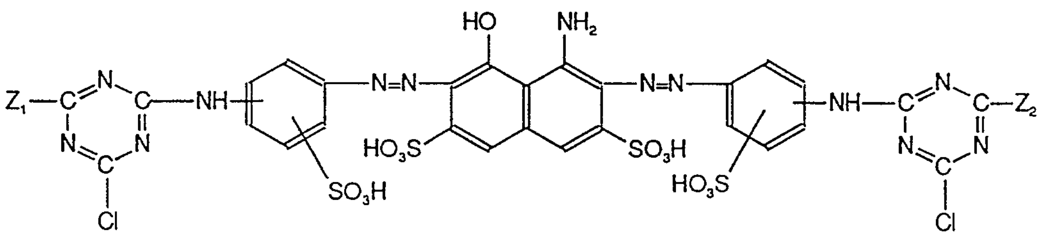

(3),

worin $Z_1$ und $Z_2$ die für Formel (2) geltenden Bedeutungen haben.

e) Reaktivfarbstoffe der Formel (3), worin $Z_1$ und $Z_2$ Hydroxy-$C_{1-4}$-alkylamino, N-$C_{1-4}$-Alkyl-N-hydroxy-$C_{1-4}$-alkylamino, N,N-Di-hydroxy-$C_{1-4}$-alkylamino oder N-Phenyl-N-hydroxy-$C_{1-4}$-alkylamino ist.

f) Reaktivfarbstoffe der Formel

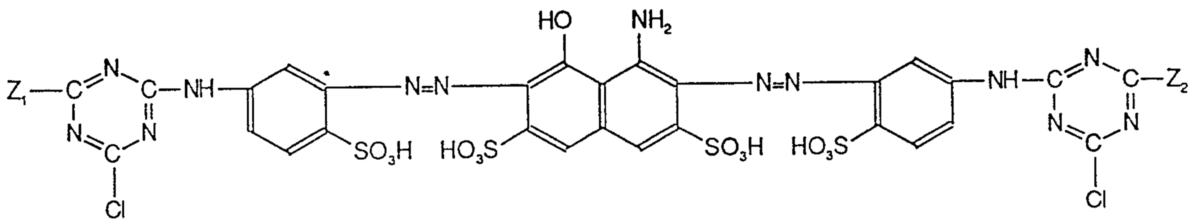

(4),

worin $Z_1$ und $Z_2$ die für e) geltenden Bedeutungen haben.

g) Reaktivfarbstoffe der Formel (4), worin $Z_1$ und $Z_2$ β-Hydroxyäthylamino, N,N-Di-β-hydroxyäthylamino, N-Methyl-N-β-hydroxyäthylamino, N-Aethyl-N-β-hydroxyäthylamino, Tri(hydroxymethyl)-methylamino oder N-Phenyl-N-β-hydroxy-äthylamino ist.

Bevorzugt ist insbesondere:

h) der Reaktivfarbstoff der Formel

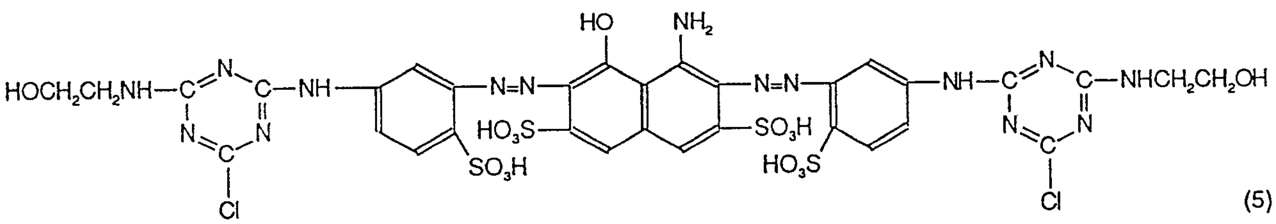

(5)

Das Verfahren zur Herstellung der Reaktivfarbstoffe der Formel (1) ist dadurch gekennzeichnet, dass man 1-Amino-8-hydroxynaphthalin-3,6- oder -4,6-disulfonsäre, Benzoldiazokomponenten (A) und (B), 2,4,6-Trichlor-s-triazin und Aminoverbindungen ($Z_1$) und ($Z_2$) in geeigneter Reihenfolge kuppelt und kondensiert.

Da die einzelnen oben angegebenen Verfahrensschritte in unterschiedlicher Reihenfolge, gegebenenfalls teilweise auch gleichzeitig ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet. Dabei wird bekanntlich zuerst im sauren Medium die Kupplung in der ortho-Aminostellung und anschliessend im alkalischen Bereich die Kupplung in der ortho-Hydroxystellung ausgeführt, da 1-Amino-8-naphtholsulfonsäuren, die zuerst in alkalischem Medium gekuppelt werden (o-Hydroxyazofarbstoffe), sich nicht zu Disazofarbstoffen weiter kuppeln lassen.

Wichtige Verfahrensvarianten sind dadurch gekennzeichnet, dass man

1 2 Mol 2,4,6-Trichlor-s-triazin mit 1 Mol einer Disazoverbindung der Formel

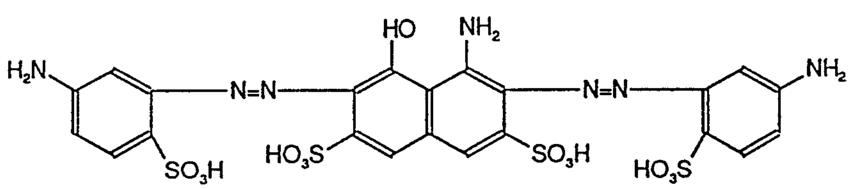

(6)

kondensiert und das erhaltene diprimäre Kondensationsprodukt im molaren Verhältnis 1 : 2 mit einer äquimolaren Mischung von Aminen ($Z_1$) und ($Z_2$) zu einem Reaktivfarbstoff der Formel (4) kondensiert;

2 2 Mol 2,4,6-Trichlor-s-triazin mit 2 Mol eines Amins ($Z_1$) bzw. ($Z_2$) kondensiert und das erhaltene primäre Kondensationsprodukt mit 1 Mol einer Disazoverbindung der Formel (6) zu einem Reaktivfarbstoff der Formel (4) kondensiert ($Z_1 = Z_2$);

3 2 Mol 2,4,6-Trichlor-s-triazin mit 1 Mol einer

Disazoverbindung der Formel (6) kondensiert und das erhaltene diprimäre Kondensationsprodukt mit 2 Mol eines Amins ($Z_1$) bzw. ($Z_2$) zu einem Reaktivfarbstoff der Formel (4) kondensiert ($Z_1 = Z_2$);

4 2 Mol 2,4,6,-Trichlor-s-triazin mit 2 Mol 1,3-Phenylendiamin-4-sulfonsäure kondensiert, das primäre Kondensationsprodukt mit 2 Mol eines Amins ($Z_1$) bzw. ($Z_2$) kondensiert, das erhaltene sekundäre Kondensationsprodukt diazotiert und zuerst in stark saurer, dann in neutraler Lösung mit 1-Amino-8-hydroxynaphthalin-3,6-disulfonsäure zu einem Reaktivfarbstoff der Formel (4) kuppelt ($Z_1 = Z_2$);

5 2 Mol 2,4,6-Trichlor-s-triazin mit 2 Mol 1,3-Phenylendiamin-4-sulfonsäure kondensiert, das primäre Kondensationsprodukt diazotiert und zuerst in stark saurer, dann in neutraler Lösung mit 1-Amino-8-hydroxynaphthalin-3,6-disulfonsäure kuppelt, und den erhaltenen Disazofarbstoff mit 2 Mol eines Amins ($Z_1$) bzw. ($Z_2$) zu einem Reaktivfarbstoff der Formel (4) kondensiert ($Z_1 = Z_2$).

Im Falle der Verwendung der 1-Amino-8-hydroxynaphthalin-4,6-disulfonsäure als Kupplungskomponente oder anderer Diazokomponenten, z.B. der 1,4-Phenylendiamin-2-sulfonsäure gilt entsprechendes.

Die Disazoverbindungen der Formel (6) werden hergestellt durch Kupplung von 1,8-Aminonaphthol-3,6-disulfonsäure mit 2 Aequivalenten diazotierter 5-Nitranilin-2-sulfonsäure (saure und alkalische Kupplung) und anschliessend Reduktion der Nitrogruppen oder durch Kupplung von 1,8-Aminonaphthol-3,6-disulfonsäure mit 2 Aequivalenten diazotierter 5-Acetylaminoanilin-2-sulfonsäure und anschliessende Verseifung der Acetylaminogruppen. Die saure Kupplung wird praktisch so ausgeführt, dass man eine Lösung der 1-Amino-8-hydroxynaphthalin-3,6-disulfonsäure in die stark saure Diazosuspension eingibt. Die an zweiter Stelle auszuführende alkalische Kupplung erfolgt in bekannter Weise in schwach alkalischem Medium. Vorzugsweise führt man die Kupplung der Monoazoverbindung mit einem weiteren Aequivalent der Diazokomponenten in bicarbonatalkalischer Lösung aus. Die Verseifung der beiden Acetylaminogruppen nach vollzogener alkalischer Kupplung führt man in bekannter Weise mit alkalischen Mitteln aus. Vorzugsweise führt man die Verseifung mittels Natriumhydroxid aus.

Die Kondensation des 2,4,6-Trichlor-s-triazins mit den Aminen ($Z_1$) und ($Z_2$) und der Disazoverbindung der Formel (6) bzw. den Diazokomponenten (A) und (B) erfolgen vorzugsweise in wässriger Lösung oder Suspension, bei niedriger Temperatur und bei schwach saurem, neutralem bis schwach alkalischem pH-Wert. Vorteilhaft wird der bei der Kondensation freiwerdende Halogenwasserstoff laufend durch Zugabe wässriger Alkalihydroxyde, -carbonate oder -bicarbonate neutralisiert.

Im folgenden sollen mögliche Ausgangsstoffe, die zur Herstellung der Reaktivfarbstoffe der Formel (1) verwendet werden können, einzeln genannt werden.

Kupplungskomponenten:
1-Amino-8-hydroxynaphthalin-3,6-disulfonsäure (H-Säure),
1-Amino-8-hydroxynaphthalin-4,6-disulfonsäure (K-Säure).

Diazokomponenten:
1,3-Diaminobenzol, 1,4-Diaminobenzol, 1,3-Diamino-4-chlorbenzol, 1,3-Diamino-4-methylbenzo, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 1,3-Diamino-2,4,6-trimethylbenzol, 1,4-Diamino-2,3,5,6-tetramethylbenzol, 1,3-Diamino-4-nitrobenzol, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1-Amino-3- oder -4-nitrobenzol-6-sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Amino-4-acetylaminobenzol-2- oder -3-sulfonsäure, 1-Amino-3-acetylaminobenzol-4- oder -6-sulfonsäure, 1-Amino-3-acetylaminobenzol-4,6-disulfonsäure, 1-Amino-4-acetylaminobenzol-2,5-oder -2,6-disulfonsäure, 1-Amino-3-acetylamino-4-methylbenzol-6-sulfonsäure.

Reaktivkomponente:
2,4,6-Trichlor-s-triazin (Cyanurchlorid).

Amine ($Z_1$) bzw. ($Z_2$)
Methoxyäthylamin, Aethoxyäthylamin, Methoxypropylamin, Chloräthylamin, Hydroxyäthylamin, Dihydroxyäthylamin, Hydroxypropylamin, β-Sulfatoäthylamin, N-Phenyl-N-β-hydroxyäthylamin, N-Methyl-N-β-hydroxyäthylamin, N-Aethyl-N-β-hydroxyäthylamin, Tri(hydroxymethyl)-methylamin.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art.

Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z. B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Ebenfalls geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült. Die Reaktivfarbstoffe der Formel (1) eignen sich auch zum Druck, vor allem auf Baumwolle, ebenso aber auch zum Bedrucken von stickstoffhaltigen Fasern, z. B. von Wolle, Seide oder Wolle enthaltenden Mischgeweben. Die Reaktivfarbstoffe der Formel (1) eignen sich besonders zum Färben nach der Ausziehmethode; die Fixiergrade sind hoch, und die nicht fixierten Anteile können leicht ausgewaschen werden.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit und Reibechtheit.

Aus der EP-A-43 796, Beispiel 2, ist ein ähnlicher Farbstoff bekannt, der jedoch nicht alle vorteilhaften Eigenschaften der erfindungsgemässen Farbstoffe aufweist.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

Beispiel 1

21,5 Teile des Disazofarbstoffes der Formel

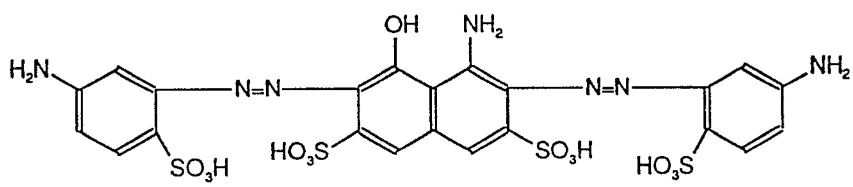

werden in 300 Teilen Eiswasser neutral gelöst und unter gutem Rühren mit einer Lösung von 11,4 Teilen Cyanurchlorid in 60 Teilen Aceton versetzt. Die Temperatur steigt auf 15 bis 20 °C und durch Zutropfen von 1-n Natriumhydroxydlösung wird der pH-Wert bei 6 bis 7 gehalten. Nach vollständiger Acylierung der beiden endständigen Aminogruppen versetzt man die Farbstoffsuspension mit 4 Teilen Aethanolamin, erwärmt das Reaktionsgemisch auf 40 bis 45 °C und hält das pH durch Eintropfen von 1-n Natriumhydroxydlösung bei 8. Nach 1 bis 2 Stunden ist die Amidierung beendet. Durch Zugabe von 10 Vol.% Kochsalz wird der Farbstoff aus der erhaltenen Lösung ausgefällt, abfiltriert und im Vakuum bie 60 °C getrocknet. Der so erhaltene Farbstoff der Formel

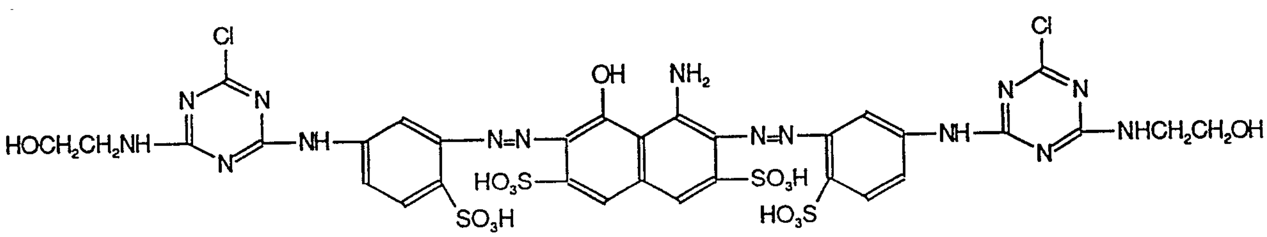

färbt Baumwolle nach dem Ausziehverfahren in marineblauen Tönen.

Ähnliche Farbstoffe werden erhalten, wenn die Amidierung im obigen Beispiel statt mit Aethanolamin mit der entsprechenden Menge eines der folgenden Amine durchgeführt wird:

Diäthanolamin 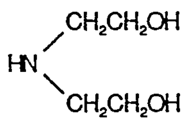

N-Methyl-äthynolamin $CH_3—NH—CH_2CH_2OH$

N-Aethyl-äthanolamin $CH_3CH_2—NH—CH_2CH_2OH$

Tris(hydroxymethyl)-aminomethan 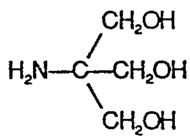

N-Oxäthylanilin 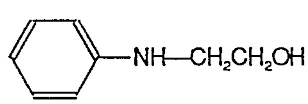

Beispiel 2

Zu einer Suspension von 44 Teilen Cyanurchlorid in 250 Teilen Eiswasser gibt man innert ca. ½ Stunde eine Lösung von 44 Teilen 1,3-Phenylendiamin-4-sulfonsäure in 250 Volumenteilen Wasser und 30 Teilen Natronlauge 30%. Der pH-Wert wird anschliessend durch langsames Zutropfen von 30%iger Natronlauge auf pH = 6,5 gestellt. Sobald das Diamin nicht mehr nachgewiesen werden kann, wird die kalte Suspension des Monokondensats mit 16 Teilen Aethanolamin versetzt. Bei 10 bis 20 °C wird der pH-Wert durch Zugeben von 30%iger Natronlauge bei pH = 9 bis 10,5 gehalten. Die entstandene Lösung wird mit 54 Volumenteilen 4-n Natriumnitritlösung versetzt und diazotiert durch Einlaufen in eine Vorlage von 54 Teilen Salzäure in 150 Volumenteilen Wasser. Die Diazotierung ist in wenigen Minuten beendet. Ein eventuell noch vorhandener Nitritüberschuss wird mit Sulfaminsäure zerstört. Zu dieser Diazosuspension läuft bei 10 bis 20 °C eine Lösung von 31,9 Teilen 1-Amino-8-naphthol-3,6-disulfonsäure in 150 Volumenteilen Wasser und 9 Teilen Natronlauge. Die Kupplung wird durch Zusatz von Natronlauge 30% oder Natriumacetat stufenweise von pH = 2,0 auf 3,5 durchgeführt und anschliessend auf pH = 7,0 gestellt. Die Farbstoffsuspension wird auf 1800 Teile gestellt und bei 60 °C durch Zugabe von 9 Vol.-% Kochsalz gesalzen.

Weitere wertvolle Reaktivfarbstoffe, die Baumwolle in den in Tabelle 1, Spalte 4, angegebenen Farbtönen färben, werden erhalten, wenn man die in Spalte 2 angegebene diazotierte Diazokomponente sauer auf 1-Amino-8-hydroxynaphthalin-3,6-disulfonsäure kuppelt, und auf die so erhaltene Monoazoverbindung die in Spalte 3 angegebene diazotierte Diazokomponente kuppelt.

Tabelle 1

| Nr. | Diazokomponente | Diazokomponente | Nuance |
|---|---|---|---|
| 1 | 2-(3′-Amino-4′-sulfophenylamino)-4-chlor-6-(β-hydroxyäthyl-amino)-1,3,5-triazin | 2-(3′-Amino-4′-sulfophenylamino)-4-chlor-6-(dihydroxyäthylamino)-1,3,5-triazin | marineblau |
| 2 | 2-(3′-Amino-4′-sulfophenylamino)-4-chlor-6-(β-hydroxyäthylamino)-1,3,5-triazin | 2-(3′-Amino-4′-sulfophenylamino)-4-chlor-6-(N-phenyl-N-β-hydroxyäthyl-amino)-1,3,5-triazin | marineblau |
| 3 | 2-(3′-Amino-4′-sulfophenylamino)-4-chlor-6-(β-hydroxyäthylamino)-1,3,5-triazin | 2-(3′-Amino-4′-sulfophenylamino)-4-chlor-6-(N-äthyl-N-β-hydroxyäthyl-amino)-1,3,5-triazin | marineblau |
| 4 | 2-(4′-Amino-3′-sulfophenylamino)-4-chlor-6-(β-hydroxyäthylamino)-1,3,5-triazin | 2-(4′-Amino-3′-sulfophenylamino)-4-chlor-6-(β-hydroxyäthylamino)-1,3,5-triazin | grünstichig marineblau |
| 5 | 2-(4′-Amino-3′-sulfophenylamino)-4-chlor-6-(dihydroxyäthylamino)-1,3,5-triazin | 2-(4′-Amino-3′-sulfophenylamino)-4-chlor-6-(dihydroxyäthylamino)-1,3,5-triazin | grünstichig marineblau |
| 6 | 2-(4′-Amino-3′-sulfophenylamino)-4-chlor-6-(äthoxyäthylamino)-1,3,5-triazin | 2-(4′-Amino-3′-sulfophenylamino)-4-chlor-6-(äthoxyäthylamino)-1,3,5-triazin | grünstichig marineblau |
| 7 | 2-(4′-Amino-3′-sulfophenylamino)-4-chlor-6-(N-äthyl-N-β-hydroxyäthylamino)-1,3,5-triazin | 2-(4′-Amino-3′-sulfophenylamino)-4-chlor-6-(N-äthyl-N-β-hydroxyäthylamino)-1,3,5-triazin | grünstichig marineblau |
| 8 | 2-(4′-Amino-3′-sulfophenylamino)-4-chlor-6-(N-phenyl-N-β-hydroxyäthyl-amino)-1,3,5-triazin | 2-(4′-Amino-3′-sulfophenylamino)-4-chlor-6-(N-phenyl-N-β-hydroxyäthyl-amino)-1,3,5-triazin | grünstichig marineblau |

Tabelle 1 (Fortsetzung)

| Nr. | Diazokomponente | Diazokomponente | Nuance |
|---|---|---|---|
| 9 | 2-(3'-Amino-4'-sulfophenylamino)-4-chlor-6-(dihydroxyäthylami no)-1,3,5-triazin | 2-(3'-Amino-4'-sulfophenylamino)-4-chlor-6-(β-hydroxyäthylami no)-1,3,5-triazin | marineblau |
| 10 | 2-(3'-Amino-4'-sulfophenylamino)-4-chlor-6-(N-phenyl-N-β-hydroxyäthyl-amino)-1,3,5-triazin | 2-(3'-Amino-4'-sulfophenylamino)-4-chlor-6-(β-hydroxyäthylami no)-1,3,5-triazin | marineblau |
| 11 | 2-(3'-Amino-4'-sulfophenylamino)-4-chlor-6-(N-äthyl-N-β-hydroxyäthylami-no)-1,3,5-triazin | 2-(3'-Amino-4'-sulfophenylamino)-4-chlor-6-(β-hydroxyäthylami no)-1,3,5-triazin | marineblau |
| 12 | 2-(3'-Amino-4'-sulfophenylamino)-4-chlor-6-(β-hydroxyäthylami no)-1,3,5-triazin | 2-(4'-Amino-3'-sulfophenylamino)-4-chlor-6-(β-hydroxyäthylami no)-1,3,5-triazin | marineblau |
| 13 | 2-(3'-Amino-4'-sulfophenylamino)-4-chlor-6-(β-hydroxyäthylami no)-1,3,5-triazin | 2-(4'-Amino-3'-sulfophenylamino)-4-chlor-6-(dihydroxyäthylami no)-1,3,5-triazin | marineblau |
| 14 | 2-(3'-Amino-4'-sulfophenylamino)-4-chlor-6-(β-hydroxyäthylami no)-1,3,5-triazin | 2-(4'-Amino-3'-sulfophenylamino)-4-chlor-6-(dihydroxyäthylami no)-1,3,5-triazin | marineblau |
| 15 | 2-(3'-Amino-4'-sulfophenylamino)-4-chlor-6-(β-hydroxyäthylami no)-1,3,5-triazin | 2-(4'-Amino-3'-sulfophenylamino)-4-chlor-6-(N-äthyl-N-β-hydroxyäthylami-no)-1,3,5-triazin | marineblau |
| 16 | 2-(3'-Amino-4'-sulfophenylamino)-4-chlor-6-(β-hydroxyäthylami no)-1,3,5-triazin | 2-(4'-Amino-3'-sulfophenylamino)-4-chlor-6-(N-phenyl-N-β-hydroxyäthyl-amino)-1,3,5-triazin | marineblau |
| 17 | 2-(4'-Amino-2',5'-disulfophenylami-no)-4-chlor-6-(β-hydroxyäthylami-no)-1,3,5-triazin | 2-(3'-Amino-4'-sulfophenylamino)-4-chlor-6-(β-hydroxyäthylami no)-1,3,5-triazin | marineblau |
| 18 | 2-(4'-Amino-2',5'-disulfophenylami-no)-4-chlor-6-(β-hydroxyäthylami-no)-1,3,5-triazin | 2-(3'-Amino-4'-sulfophenylamino)-4-chlor-6-(dihydroxyäthylami no)-1,3,5-triazin | marineblau |
| 19 | 2-(4'-Amino-2',5'-disulfophenylami-no)-4-chlor-6-(β-hydroxyäthylami-no)-1,3,5-triazin | 2-(3'-Amino-4'-sulfophenylamino)-4-chlor-6-(N-phenyl-N-β-hydroxyäthyl-amino)-1,3,5-triazin | marineblau |
| 20 | 2-(4'-Amino-2',5'-disulfophenylami-no)-4-chlor-6-(β-hydroxyäthylami-no)-1,3,5-triazin | 2-(3'-Amino-4'-sulfophenylamino)-4-chlor-6-(N-äthyl-N-β-hydroxyäthylami-no)-1,3,5-triazin | marineblau |
| 21 | 2-(3'-Amino-4'-sulfophenylamino)-4-chlor-6-(β-hydroxyäthylami no)-1,3,5-triazin | 2-(4'-Amino-2',5'-disulfophenylami-no)-4-chlor-6-(β-hydroxyäthylami-no)-1,3,5-triazin | marineblau |
| 22 | 2-(3'-Amino-4'-sulfophenylamino)-4-chlor-6-(N-phenyl-N-β-hydroxyäthyl-amino)-1,3,5-triazin | 2-(4'-Amino-2',5'-disulfophenylami-no)-4-chlor-6-(β-hydroxyäthylami-no)-1,3,5-triazin | marineblau |
| 23 | 2-(3'-Amino-4'-sulfophenylamino)-4-chlor-6-(N-äthyl-N-β-hydroxyäthylami-no)-1,3,5-triazin | 2-(4'-Amino-2',5'-disulfophenylami-no)-4-chlor-6-(β-hydroxyäthylami-no)-1,3,5-triazin | marineblau |

Färbevorschrift 1

2 Teile des gemäss Beispiel 1 erhaltenen Farbstoffes werden unter Zusatz von 5 bis 20 Teilen Harnstoff und 2 Teilen kalzinierter Soda in 100 Teilen Wasser bei 20 bis 50 °C gelöst. Mit der erhaltenen Lösung wird ein Baumwollgewebe imprägniert, so dass es um 60 bis 80% seines Gewichtes zunimmt, und dann getrocknet. Danach wird während 1½ bis 5 Minuten bei 140 bis 210 °C thermofixiert, dann während einer Viertelstunde in einer 0,1%igen kochenden Lösung eines ionenfreien Waschmittels geseift, gespült und getrocknet.

Färbevorschrift 2

2 Teile des gemäss Beispiel 1 erhaltenen Farbstoffes werden in 2000 Teilen Wasser unter Zusatz von 120 Teilen Kochsalz oder kalziniertem Glaubersalz bei 75°C gelöst. Man geht mit 100 Teilen eines Baumwollgewebes in dieses Färbebad ein und hält die Temperatur während 30 bis 60 Minuten konstant. Danach werden 10 Teile kalzinierter Soda und 4 ml Natronlauge (36°Bé) zugegeben. Die Temperatur wird weitere 45 bis 60 Minuten bei 75 bis 80°C gehalten, dann wird während 15 Minuten in einer 0,1%igen kochenden Lösung eines ionenfreien Waschmittels geseift, gespült und getrocknet.

Färbevorschrift 3

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Danach imprägniert man das Gewebe mit einer 20°C warmen Lösung, die pro Liter 5 g Natriumhydroxyd und 300 g Natriumchlorid enthält, quetscht auf 75% Gewichtszunahme ab, dämpft die Färbung während 30 Sekunden bei 100 bis 101°C, spült, seift während einer Viertelstunde in einer 0,3%igen kochenden Lösung eines ionenfreien Waschmittels, spült und trocknet.

Färbevorschrift 4

2 Teile des gemäss Beispiel 1 erhaltenen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60°C, wobei nach 30 Minuten 40 Teile kalzinierte Soda und nochmals 60 Teile Natriumchlorid zugegeben werden. Man hält die Temperatur 30 Minuten auf 60°C, spült und seift dann die Färbung während 15 Minuten in einer 0,3%igen kochenden Lösung eines ionenfreien Waschmittels, spült und trocknet.

Druckvorschrift

2 Teile des gemäss Beispiel 1 hergestellten Farbstoffes werden unter schnellem Rühren in 100 Teile einer Stammverdickung, enthaltend 45 Teile 5%ige Natriumalginatverdickung, 32 Teile Wasser, 20 Teile Harnstoff, 1 Teil m-nitrobenzolsulfonsaures Natrium sowie 2 Teile Natriumcarbonat, eingestreut. Mit der so erhaltenen Druckpaste bedruckt man ein Baumwollgewebe auf einer Rouleauxdruckmaschine und dämpft den erhaltenen bedruckten Stoff 4 bis 8 Minuten bei 100°C in gesättigtem Dampf. Das bedruckte Gewebe wird dann in kaltem und heissem Wasser gründlich gespült, wobei sich die nicht chemisch fixierten Anteile sehr leicht von der Faser entfernen lassen, und anschliessend getrocknet.

**Patentansprüche**

1. Reaktivfarbstoffe der Formel

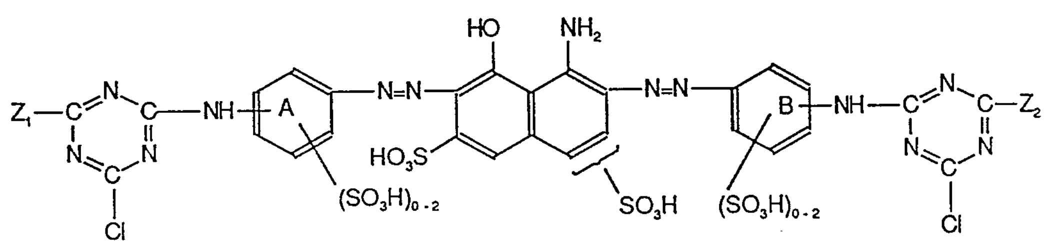

(1),

worin $Z_1$ und $Z_2$ unabhängig voneinander je ein Rest der Formel

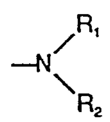

(2),

$R_1$ Alkyl, das durch Hydroxy, Alkoxy, Hydroxyalkoxy, Alkylcarbonyl, Alkoxycarbonyl, Alkylcarbonyloxy, Carboxy, Cyan, Chlor oder Sulfato substituiert sein kann, und $R_2$ Wasserstoff, Alkyl, das durch Hydroxy, Alkoxy, Hydroxyalkoxy, Alkylcarbonyl, Alkoxycarbonyl, Alkylcarbonyloxy, Carboxy, Cyan, Chlor oder Sulfato substituiert sein kann, oder Phenyl, Benzyl oder Phenäthyl, worin der Benzoring durch Methyl, Methoxy, Acetylamino, Chlor, Brom oder Carboxy substituiert sein kann, ist, und die Benzolringe A und B weitersubstituiert sein können.

2. Reaktivfarbstoffe gemäss Anspruch 1, worin die Mittelkomponente 1-Amino-8-hydroxynaphthalin-3,6-disulfonsäure ist, und $Z_1$, $Z_2$, A und B die in Anspruch 1 angegebenen Bedeutungen haben.

3. Reaktivfarbstoffe gemäss Anspruch 2, worin $Z_1$ die gleiche Bedeutung wie $Z_2$ hat, und die Benzolringe A und B ausser 0 bis 2 Sulfogruppen keine weiteren Substituenten enthalten.

4. Reaktivfarbstoffe gemäss Anspruch 3, worin die Benzolringe A und B je eine Sulfogruppe enthalten.

5. Reaktivfarbstoffe gemäss Anspruch 1, der Formel

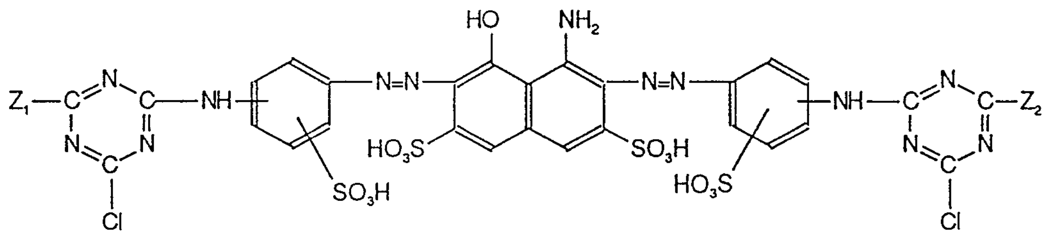

(3),

worin $Z_1$ und $Z_2$ die für Formel (2) geltenden Bedeutungen haben.

6. Reaktivfarbstoffe gemäss Anspruch 5, worin $Z_1$ und $Z_2$ Hydroxy-$C_{1-4}$-alkylamino, H-$C_{1-4}$-Alkyl-N-hydroxy-$C_{1-4}$-alkylamino, N,N-Dihydroxy-$C_{1-4}$-alkylamino oder N-Phenyl-N-hydroxy-$C_{1-4}$-alylamino ist.

7. Raktivfarbstoffe gemäss Anspruch 6, der Formel

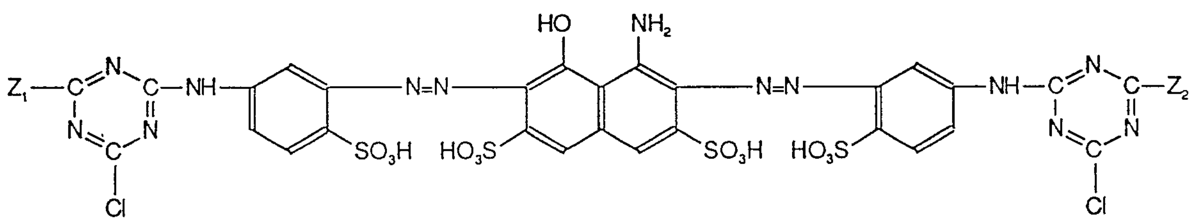

(4),

worin $Z_1$ und $Z_2$ die für Anspruch 6 geltenden Bedeutungen haben.

8. Reaktivfarbstoffe gemäss Anspruch 7, worin $Z_1$ und $Z_2$ β-Hydroxyäthylamino, N,N-Di-β-hydroxyäthylamino, N-Methyl-N-β-hydroxyäthylamino, N-Aethyl-N-β-hydroxyäthylamino, Tri(hydroxymethyl)-methylamino oder N-Phenyl-N-β-hydroxyäthylamino ist.

9. Reaktivfarbstoff gemäss Anspruch 8, der Formel

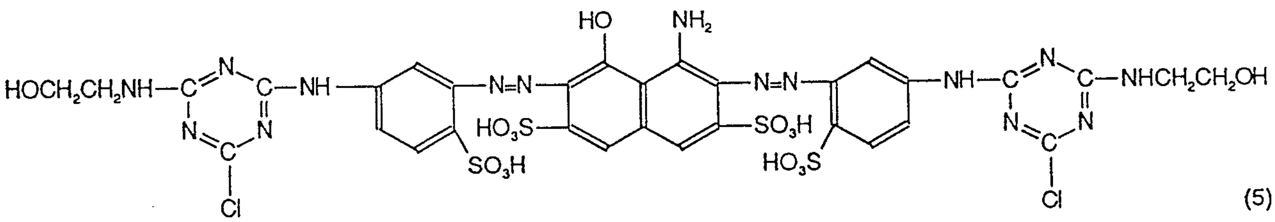

(5)

10. Verfahren zur Herstellung von Reaktivfarbstoffen gemäss Anspruch 1, dadurch gekennzeichnet, dass man 1-Amino-8-hydroxynaphthalin-3,6- oder -4,6-disulfonsäure, Benzoldiazokomponenten (A) und (B), 2,4,6-Tichlor-s-triazin, und Aminoverbindungen ($Z_1$) und ($Z_2$) in geeigneter Reihenfolge kuppelt und kondensiert.

11. Verwendung der Reaktivfarbstoffe gemäss Anspruch 1 zum Färben oder Bedrucken von textilen Fasermaterialien.

12. Verwendung gemäss Anspruch 11 zum Färben von Cellulosefasern, insbesondere Baumwolle.

**Claims**

1. A reactive dye of the formula

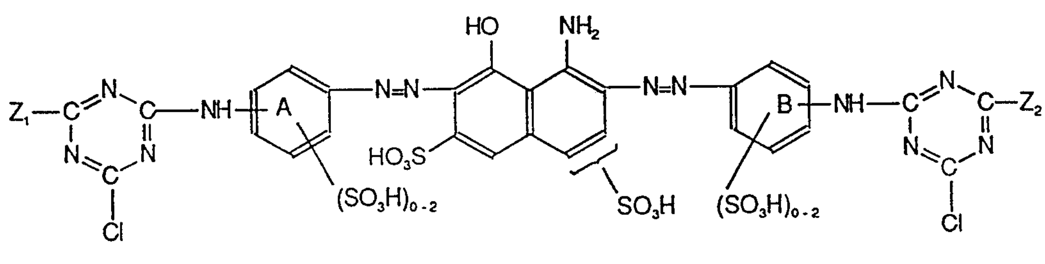

(1),

wherein each of $Z_1$ and $Z_2$ independently of the other is a radical of the formula

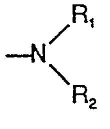

(2),

$R_1$ is alkyl which may be substituted by hydroxyl, alkoxy, hydroxyalkoxy, alkylcarbonyl, alkoxycarbonyl, alkylcarbonyloxy, carboxyl, cyano, chlorine or sulfato, and $R_2$ is hydrogen, alkyl which may be substituted by hydroxyl, alkoxy, hydroxyalkoxy, alkylcarbonyl, alkoxycarbonyl, alkylcarbonyloxy, carboxyl, cyano, chlorine or sulfato, or is phenyl, benzyl or phenethyl, wherein the benzene ring may be substituted by methyl, methoxy, acetylamino, chlorine, bromine or carboxyl, and the benzene rings A and B may be further substuted.

2. A reactive dye according to claim 1, wherein the middle component is 1-amino-8-hydroxynaphthalene-3,6-disulfonic acid, and $Z_1$, $Z_2$, A and B are as defined in claim 1.

3. A reactive dye according to claim 2, wherein $Z_1$ has the same meaning as $Z_2$, and the benzene rings A and B contain no further substituents apart from 0 to 2 sulfo groups.

4. A reactive dye according to claim 3, wherein each of the benzene rings A and B contains a sulfo group.

5. A reactive dye according to claim 1, of the formula

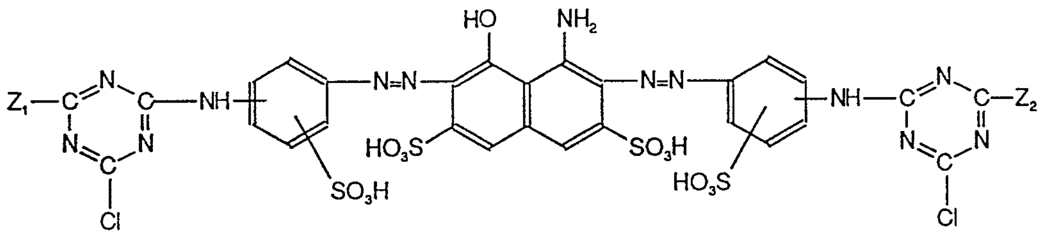

(3),

wherein $Z_1$ and $Z_2$ are as defined for formula (2).

6. A reactive dye according to claim 5, wherein $Z_1$ and $Z_2$ are hydroxy-$C_1$-$C_4$alkylamino, H-$C_1$-$C_4$alkyl-N-hydroxy-$C_1$-$C_4$alkylamino, N,N-dihydroxy-$C_1$-$C_4$alkylamino or N-phenyl-N-hydroxy-$C_1$-$C_4$alkylamino.

7. A reactive dye according to claim 6, of the formula

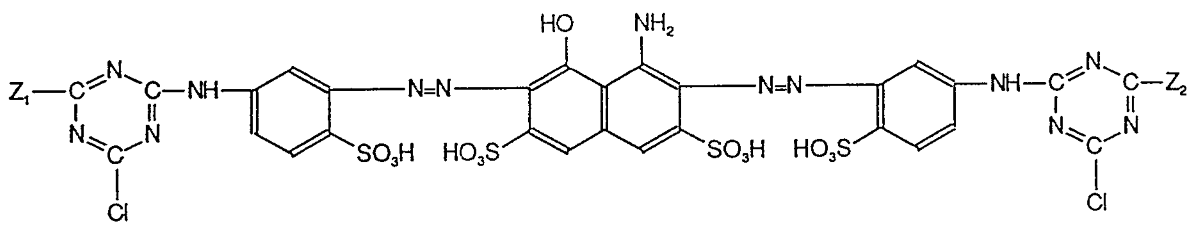

(4),

wherein $Z_1$ and $Z_2$ are as defined for claim 6.

8. A reactive dye according to claim 7, wherein $Z_1$ and $Z_2$ are β-hydroxy-ethylamino, N,N-di-β-hydroxyethylamino, N-methyl-N-β-hydroxyethylamino, N-ethyl-N-β-hydroxyethylamino, tri(hydroxymethyl)-methylamino or N-phenyl-N-β-hydroxyethylamino.

9. A reactive dye according to claim 8, of the formula

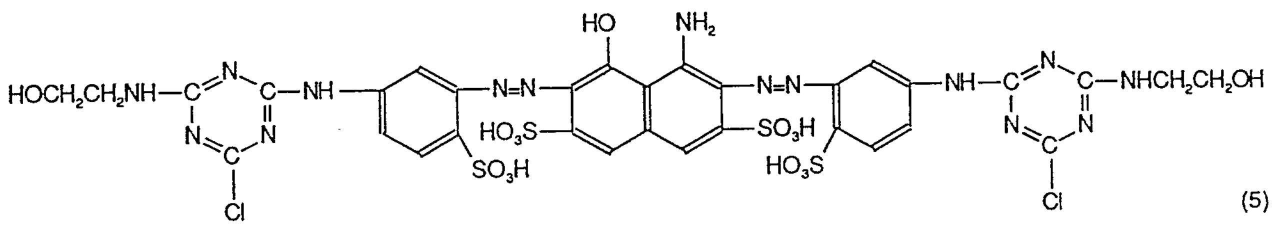

(5)

10. A process for the preparation of a reactive dye according to claim 1, which process comprises coupling and condensing, in suitable sequence, 1-amino-8-hydroxynaphthalene-3,6-disulfonic acid or 1-amino-8-hydroxynaphthalene-4,6-disulfonic acid, benzenediazo components (A) and (B), 2,4,6-trichloro-s-triazine, and amino compounds ($Z_1$) and ($Z_2$).

11. Use of a reactive dye according to claim 1 for dyeing or printing textile fibre materials.

12. Use according to claim 11 for dyeing cellulose fibres, especially cotton.

**Revendications**

1. Colorants réactifs de formule:

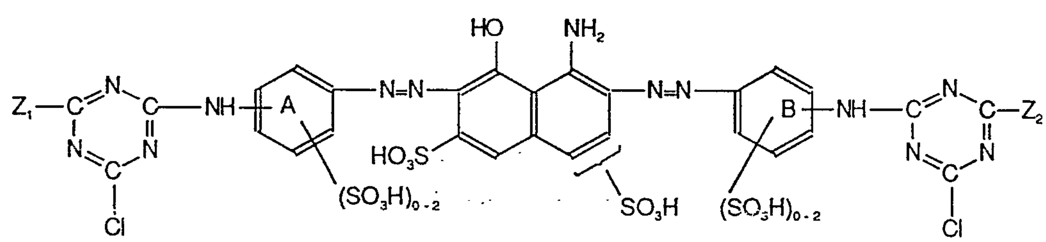

(1),

où $Z_1$ et $Z_2$ sont chacun, indépendamment l'un de l'autre un reste de formule

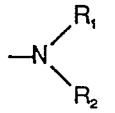

(2),

$R_1$ est un reste alkyle qui peut être à substituant(s) hydroxy, alcoxy, hydroxyalcoxy, alkylcarbonyle, alcoxycarbonyle, alkylcarbonlyloxy, carboxy, cyano, chlore ou sulfato, et $R_2$ est un hydrogène, un reste alkyle qui peut être à substituant(s) hydroxy, alcoxy, hydroxyalcoxy, alkylcarbonyle, alcoxycarbonyle, alkylcarbonyloxy, carboxy, cyano, chlore ou sulfato, ou le reste phényle, le reste benzyle ou le reste phénéthyle, le noyau benzènique pouvant être à substituant(s) méthyle, méthoxy, acétylamino, chlore, brome ou carboxy, et les noyaux benzèniques A et B peuvent être davantage substitués.

2. Colorants réactifs selon la revendication 1, où le constituant central est l'acide 1-amino-8-hydroxynaphtalène-3,6-disulfonique, et où $Z_1$, $Z_2$, A et B ont les significations indiquées dans la revendication 1.

3. Colorants réactifs selon la revendication 2, où $Z_1$ a la même signification que $Z_2$, et où les noyaux benzèniques A et B ne contiennent aucun autre substituant en dehors de 0 à 2 groupes sulfo.

4. Colorants réactifs selon la revendication 3, où les noyaux benzèniques A et B contiennent chacun un groupe sulfo.

5. Colorants réactifs selon la revendication 1 de formule

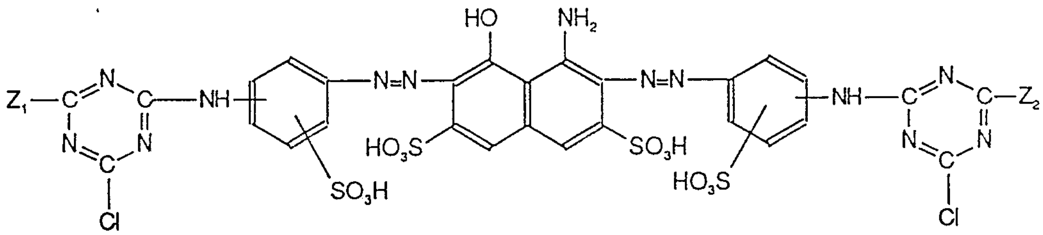

(3),

où $Z_1$ et $Z_2$ ont les significations qui sont valables pour la formule (2).

6. Colorants réactifs selon la revendication 5, où $Z_1$ et $Z_2$ sont un groupe hydroxy-$C_{1-4}$-alkylamino, H-$C_{1-4}$-alkyl-N-hydroxy-$C_{1-4}$-alkylamino, N,N-dihydroxy-$C_{1-4}$-alkylamino ou N-phényl-N-hydroxy-$C_{1-4}$-alkylamino.

7. Colorants réactifs selon la revendication 6 de formule

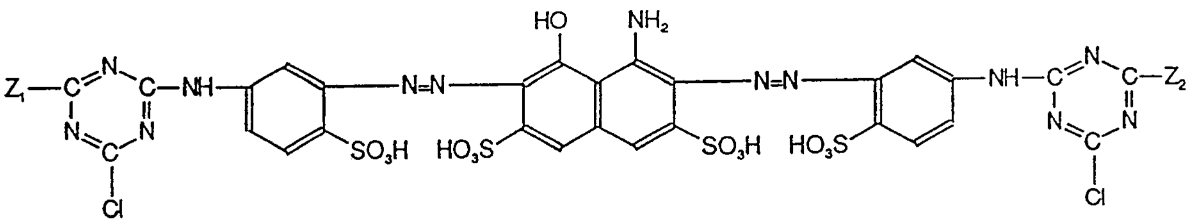

(4),

où $Z_1$ et $Z_2$ ont les significations qui sont valables pour la revendication 6.

8. Colorants réactifs selon la revendication 7, où $Z_1$ et $Z_2$ sont β-hydroxyéthylamino, N,N-di-β-hydroxyéthylamino, N-méthyl-N-]-hydroxyéthylamino, N-éthyl-N-βhydroxyéthylamino, tri(hydroxyméthyl)-méthylamino ou N-phényl-N-β-hydroxyéthylamino.

9. Colorant réactif selon la revendication 8 de formule:

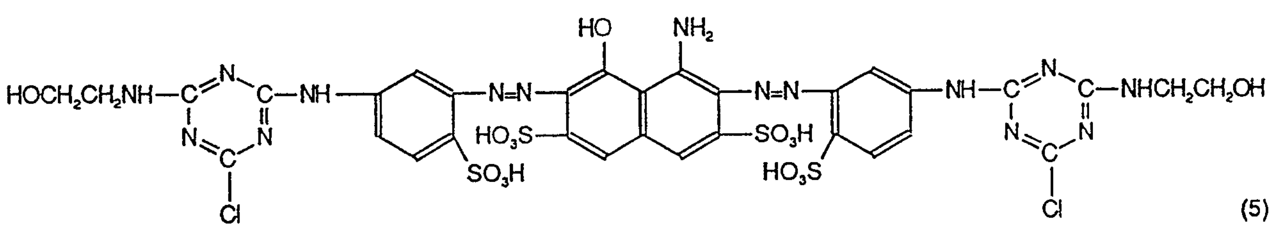

(5)

10. Procédé de préparation de colorants réactifs selon la revendication 1, caractérisé par le fait que l'on copule et l'on condense, dans un ordre approprié, l'acide 1-amino-8-hydroxynaphtalène-3,6- ou 4,6-disulfonique, les constituants diazo benzèniques (A) et (B), la 2,4,6-trichloro-s-triazine, et les composés aminés ($Z_1$) et ($Z_2$).

11. Utilisation des colorants réactifs selon la revendication 1 pour la teinture ou l'impression de matières en fibres textiles.

12. Utilisation selon la revendication 11 pour la teinture de fibres cellulosiques, en particulier du coton.